# EUROPÄISCHE PATENTSCHRIFT

(11) **EP 0 800 710 B1**
(45) Veröffentlichungstag und Bekanntmachung des Hinweises auf die Patenterteilung: **23.09.1998**
(21) Anmeldenummer: 95940265.2
(22) Anmeldetag: 01.12.1995
(51) Int. Cl.: H01M 10/54, C22B 3/00

(54) **VERFAHREN ZUR RÜCKGEWINNUNG VON METALLEN AUS GEBRAUCHTEN NICKEL-METALLHYDRID-AKKUMULATOREN**
PROCESS FOR RECOVERY OF METALS FROM USED NICKEL-METAL HYDRIDE ACCUMULATORS
PROCEDE DE RECUPERATION DES METAUX CONTENUS DANS DES ACCUMULATEURS USES EN NICKEL-HYDRURE METALLIQUE

(30) Priorität: 20.12.1994 DE 4445496
(43) Veröffentlichungstag der Anmeldung: 15.10.1997
(73) Patentinhaber: VARTA Batterie Aktiengesellschaft, 30419 Hannover (DE); TREIBACHER AUERMET Produktionsges. m.b.H., 9330 Treibach-Althofen (AT)
(72) Erfinder: KLEINSORGEN, Klaus, D-65779 Kelkheim (DE); KÖHLER, Uwe, D-65779 Kelkheim (DE); BOUVIER, Alexander, A-9021 Krumpendorf (AT); FÖLZER, Andreas, A-9330 Treibach-Althofen (AT)
(74) Vertreter: Kaiser, Dieter Ralf, Dipl.-Ing.
(86) Internationale Anmeldenummer: EP9504735
(87) Internationale Veröffentlichungsnummer: WO9619840

(56) Entgegenhaltungen:
- FR-A- 2 131 824
- GB-A- 2 078 258
- US-A- 4 041 125
- US-A- 4 162 296

## Beschreibung

Die Erfindung betrifft ein Verfahren zur Rückgewinnung von Metallen aus gebrauchten Nikkel-Metallhydrid-Akkumulatoren, bei dem nach Abtrennung der Seltenerdmetalle als Doppelsulfate aus einer sauren Aufschlußlösung des Akkumulatorenschrotts und nachfolgender Entfernung des Eisens durch Anheben des pH-Wertes das Filtrat der Eisen-Ausfällung zum Zwecke des Ausbringens weiterer Metalle wie Zink, Cadmium, Mangan, Aluminium sowie Resten an Eisen und Seltener Erden einer Flüssig-Flüssig-Extraktion mit einem organischen Extraktionsmittel unterzogen wird.

Nickel-Metallhydrid-Akkumulatoren sind elektrochemische Energiespeicher, die im Vergleich zu anderen Akkumulatoren wie beispielsweise dem Bleiakkumulator oder dem Nickel-Cadmium-Akkumulator eine größere Speicherkapazität besitzen. Daher findet dieses Speichersystem nicht nur für die netzunabhängige Energieversorgung von Geräten der Unterhaltungselektronik, Spielzeugen und dergleichen etwa in Form von Knopfzellen, sondem auch bei Fahrzeugantrieben in großdimensionierten Batteriegehäusen zunehmende Verbreitung.

Das gasdichte, aus Stahlblech gebildete Gehäuse von Nickel-Metallhydrid-Akkumulatoren birgt eine oder mehrere positive Elektroden, eine oder mehrere negative Elektroden sowie Separatoren, Dichtungen und Elektrolyt.

Eine positive Elektrode besteht üblicherweise aus einem Träger und der aktiven Masse. Als Träger sind je nach Elektrodentyp Netze, Streckmetall, Lochbleche, Vliese oder hochporöse Metallschäume gebräuchlich. Das Trägermaterial ist Nickel oder vemickeltes Eisen. Die aktive Masse ist ein Gemisch aus Nickelhydroxid und Kobaltoxid und gegebenenfalls Kobalt. Neben Bindemitteln und Leitmitteln kann das Gemisch in untergeordneten Mengen weitere Metalle, darunter Zink, als Hydroxide enthalten.

Eine negative Elektrode besteht ebenfalls aus Träger und aktiver Masse. Letztere ist in diesem Fall eine Wasserstoffspeicherlegierung. Wasserstoffspeicherlegierungen sind intermetallische Verbindungen, die sich auf der Grundlage der einfachen Ausgangslegierung LaNi₅ einem AB₅-Typ oder nach der einfachen Legierung TiNi₂ einem AB₂-Typ zuordnen lassen.

Wasserstoffspeicherlegierungen des AB₅-Typs für Nickel-Metallhydrid-Akkumulatoren setzen sich üblicherweise aus 45 - 55 % Ni, 30 - 35 % Seltene Erden (SE), 5 - 15 % Co, 2 - 5 % Mn und 1 - 4 % Al zusammen.

Die wertvollen Inhaltsstoffe dieser Akkumulatoren machen deren Wiedergewinnung aus Abfallbatterien zu einem besonders dringlichen Gebot.

Für die Aufarbeitung gebrauchter Akkumulatoren, ausgerichtet insbesondere auf die sauren Bleiakkumulatoren, sind bereits viele Verfahren bekannt. Von diesen sind die Aufarbeitungsmethoden für Blei-Säure-Akkumulatoren hier von geringerem Interesse, weil sie fem vom Gegenstand der Erfindung liegen.

Den meisten der übrigen Recycling-Verfahren sind jedoch die vorbereitenden Schritte gemeinsam, die darin bestehen, daß der angelieferte Batterieschrott nach bestimmten Kriterien wie Zellengröße, Zellenform (Rundzellen, prismatische Zellen, Knopfzellen) vorsortiert wird, daß er mechanisch durch Schreddem zerkleinert wird, daß aus dem zerkleinerten und gegebenenfalls gewaschenen Schrottmaterial das den Gehäusen entstammende Eisen (und Nickel) mittels Magneten abgetrennt wird und daß das Schreddergut schließlich zur naßchemischen Weiterverarbeitung in Säure gelöst wird. Aus dieser Aufschluß- oder Wertstoff-Lösung werden die vorhandenen Metalle dann in einer Folge von fraktionierten Fällungen und Extraktionsprozessen abgetrennt und schließlich durch elektrolytische Abscheidung zurückgewonnen.

Ein sehr kompliziertes Trennverfahren, das, weil es von unsortiertem Batterieschrott ausgeht und dadurch auch Stoffe wie Kupfer und Quecksilber zu berücksichtigen hat, die in alkalischen Akkumulatoren fehlen, wird in der DE-OS 42 24 884 beschrieben. Bei diesem Verfahren macht man zur selektiven Abtrennung von Zn-lonen aus einer Fraktion der Aufschlußlösung von einer Flüssig-Flüssig-Extraktion Gebrauch, wobei ein organisches Extraktionsmittel in einer Mixer-Settler-Einheit als Selektionsphase zugeführt wird. In der Znfreien Lösung bleiben Ni und Cd zurück.

Die Flüssig-Flüssig-Extraktion spielt aber auch bei anderen bekannten Verfahren, die speziell für die Entsorgung von Nickel/Cadmium-Batterien entwickelt wurden, eine wichtige Rolle.

Gemäß WO 92/03853 wird die HCI-saure, filtrierte Aufschlußlösung von Ni/Cd-Batterieschrott durch Gegenstrom-Lösungsmittelextraktion mit 75 Vol % Tributylphosphat (TBP) und 25 Vol % aliphatischer Kohlenwasserstoff von Cd befreit und dieses durch sogenanntes Strippen (Überführen in eine wässerig-saure Phase) der elektrolytischen Abscheidung zugänglich gemacht.

In der EP-A-585701 ist eine getrennte Extraktion von Ni und Cd aus einer in HCI gelösten Feinfraktion vorgesehen, die man neben einer magnetischen Fraktion (Fe und Ni) und einer von Kunststoffen, (aus Gehäusen, Separatoren, Bindemitteln) durch Windsichtung gebildeten Leichtfraktion erhält.

Ein Recycling-Verfahren, welches sich speziell mit der Wiedergewinnung von Seltenen Erden und Übergangsmetallen aus verbrauchten Legierungen derselben befaßt, ist Gegenstand der US-PS 5 129 945. Auch dort wird zum Zwecke der Abtrennung von Fe-Resten aus der Aufschlußlösung, die in das Filtrat der vorausgegangenen Hydroxidfällung gelangt sind, eine Lösungsmittelextraktion durchgeführt. In der wässerigen Phase bleibt in diesem Falle Co zurück.

Bei allen diesen bekannten Verfahren werden Maßnahmen ergriffen, die darauf abzielen, in einem systematischen Trennprozeß die metallischen Bestandteile möglichst einzeln zu isolieren und aus der als Salz oder Hydroxid abgetrennten Metallverbindung mit einem Reduktionsmittel das reine Metall zurückzugewinnen. Für diesen letzteren Schritt eignen sich metallothermische oder elektrolytische Verfahren.

Auf diese Weise gelangt zwar das Eisen wieder zurück in die Stahlindustrie; Nickel, Kobalt und Kadmium gehen jeweils zurück in die Produktion des Batterieherstellers, aber jedes Metall für sich getrennt, so daß zur Herstellung neuen Elektrodenmaterials entsprechende Mischungen aus den Raffinaten neu vorbereitet werden müssen.

Der Erfindung liegt dagegen die Aufgabe zugrunde, aus verbrauchten Nickel-Metallhydrid-Akkumulatoren Produkte zu gewinnen, die für die Herstellung von Wasserstoffspeicherlegierungen besonders gut geeignet sind.

Die Aufgabe wird erfindungsgemäß durch ein Verfahren gelöst, wie es in Patentanspruch 1 definiert ist.

Erfindungsgemäß wird eine Flüssig-Flüssig-Extraktion hinsichtlich der Wahl des Extraktionsmittels und des pH-Wertes der Aufschlußlösung so durchgeführt, daß die Metalle Nickel und Kobalt in der wässrigen Phase vollständig gelöst und in dem gleichen Atomverhältnis zurückbleiben, wie sie im Akkumulatorenschrott vorgelegen haben.

Die erfindungsgemäße Maßnahme knüpft dabei an die vorbereitenden Verfahrensschritte an, die in der zuletzt erwähnten US-PS 5 129 945 beschrieben werden.

Demzufolge wird ein großenteils von Seltenen Erden gebildetes Schrottmaterial durch Laugung mit 2 bis 2,5 M H₂SO₄ in Lösung gebracht, wobei die Lösung neben den Seltenen Erden noch weitere Übergangsmetalle, insbesondere Fe, Ni und Co enthält.

Um zu verhindem, daß bei der nachfolgend beschriebenen Doppelsulfat-Fällung der Seltenen Erden kein Eisen als basisches Sulfat mitgefällt wird, muß vorhandenes Fe³⁺ reduziert werden. Dies geschieht, indem man die Aufschlußlösung wiederholt über das als magnetische Fraktion (Grobfraktion) mechanisch abgetrennte metallische Eisen leitet.

Aus der stark sauren Lösung werden durch Zugabe von NaOH oder NH40H, wobei der pH-Wert auf 1,5 bis 2,0 ansteigt, die Seltenen Erden als sehr schwer lösliche Doppelsalze der Zusammensetzung (SE)₂ (SO₄)₃ · Na₂ SO₄· x H₂O ausgefällt.

Der abfiltrierte Niederschlag wird in Säure gelöst, aus dieser Lösung wird ein Seltenerdchlorid oder Seltenerdoxid gewonnen, welches in einer elektrometallurgischen Reduktion zum Seltenerdmetall oder zu einer Mischung aus mehreren derselben (Mischmetall) unterworfen wird.

Im Filtrat der Doppelsulfatfällung befinden sich die nicht zu Gruppe der Seltenen Erden zählenden Übergangsmetalle sowie Aluminium und gegebenenfalls geringe Reste an Seltenen Erden. Durch Anheben des pH-Wertes auf etwa 4 bis 4,5 werden als nächstes Eisen in Form eines basischen Sulfats (Jarosit) bzw. Hydroxids und gegebenenfalls Aluminium als Al(OH)₃ ausgefällt. Zur Sicherstellung, daß alles Eisen in 3-wertiger Form in den Niederschlag geht, wird die Lösung zuvor mit einem Oxidationsmittel, vorzugsweise H₂O₂, versetzt.

Der auf die Fe-, Al-Ausfällung folgende Schritt der Reinigung von Restmetallen und Fremdmetallen (Fehlsortierung), ist eine Extraktionsstufe, die nur Co und Ni in der wässrigen Lösung beläßt und nicht erwünschte Elemente gemeinsam abtrennt. Als Extraktionsmittel eignen sich vorzugsweise phosphorhaltige Kationenaustauscher in Verbindung mit einem organischen Lösungsmittel.

Um die Gewinnung eines Endproduktes aus dem Aufbereitungsgang zu ermöglichen, welches unmittelbar zur Herstellung neuer Wasserstoffspeicherelektroden wiederverwertet werden kann, ist es erfindungsgemäß vorteilhaft, eine Flüssig-Flüssig-Extraktion im Anschluß an die Fe-, Al-Hydroxidfällung vorzunehmen. Diese wird so geführt, daß ausschließlich Nickel und Kobalt in der wässerigen Phase zurückbleiben und dort im gleichen Atomverhältnis vorhanden sind, in dem sie in dem verarbeiteten Schrott vorgelegen haben. Dies hat gleichzeitig zur Konsequenz, daß alle bis dahin nicht entfernten Begleitmetalle aus dem Schrott von Ni-Metallhydrid-Batterien nebst vereinzelten fehlsortierten Batterien (Alkali-Mangan, NiCd, NiMeH-Zellen mit AB2-Legierungen) insbesondere Zn, Cd, Mn, Cr sowie mitgeschleppte Reste an Fe, Al und Seltenen Erden bei der Extraktion in die organische Phase überführt werden. Die mit den Salzen der genannten Elemente beladene organische Phase wird zur Rückgewinnung der Metalle nach bekannten Methoden weiter behandelt.

Zu Störungen des Extraktionsprozesses kann es dann kommen, wenn der ursprüngliche Eisengehalt der Aufschlußlösung höher als 0,05 g/l ist. Deshalb ist die vorherige Eliminierung des Eisens (und Aluminiums) unbedingt erforderlich.

Die erfindungsgemäße Lösungsmittel- oder Solventextraktion stellt, indem sie der Aufschlußlösung alle Metallreste mit Ausnahme der nicht erfaßten Metalle Ni und Co vollständig entzieht, eine ,,Reinigungsextraktion" dar. Zu ihrer Durchführung wird der pH-Wert der Aufschlußlösung (Filtrat nach der Fe-, Al-Hydroxidfällung) durch Zugabe von Alkali auf Werte von pH3 bis pH4, vorzugsweise auf ca. pH 3,5, eingestellt und die Lösung wiederholt, insbesondere in einer mehrstufigen Gegenstromanlage, mit einem Gemisch aus Di-Ethyl-Hexylphosphorsäure, Isotridecanol und einem aliphatischen Kohlenwasserstoff als Verdünnungsmittel im Verhältnis 30 : 10 : 60 in intensiven Kontakt gebracht. Der Kontakt wird durch Rühren in einem Mixer begünstigt. Die wässerige Phase und die Lösungsmittelphase sollten dabei erfindungsgemäß in einem Volumenverhältnis von 1 : 1 oder größer stehen.

Nachdem durch die erfindungsgemäße Maßnahme die Elemente Mn, Cd, Fe, Al, Zn, Cr sowie die Seltenen Erden quantitativ aus der Aufschlußlösung entfernt wurden, wobei die Hauptmenge der Seltenen Erden bereits durch die vorausgegangene Doppelsulfatfällung und die Hauptmenge an Fe und Al durch Hydroxidfällung abgetrennt worden sind, können Ni und Co aus der wässerigen Phase gemeinsam zurückgewonnen werden.

Für die Ni, Co-Rückgewinnung sind die nachstehenden Methoden grundsätzlich geeignet.

So kann durch Zugabe von Natriumhydroxid und/oder Natriumkarbonat der pH-Wert der wässerigen Phase weiter bis auf Werte von ca. 10 angehoben werden. Dabei fallen die Metalle in Form von Hydroxiden bzw. Karbonaten vollständig aus. Diese werden vor der Weiterverarbeitung in einem Trockenschrank bei 100°C bis 200°C getrocknet und danach bei 400 °C bis 1000 °C verglüht und darauf in einem Lichtbogenofen mit Reduktionsmitteln wie Aluminium oder Kohle, d.h. durch einen metallothermischen oder carbothermischen Prozeß zu einer Ni/Co-Legierung erschmolzen.

Eine zweite Möglichkeit ist die Wiedergewinnung durch simultane Elektrolyse. Da die elektrochemischen Abscheidungspotentiale von Ni und Co sehr ähnlich sind, kann aus einer wässerigen Lösung eine Legierung beider Elemente im Verhältnis ihrer Konzentrationen in der Lösung abgeschieden werden. Durch Tempem der Mischung kann eine Vorlegierung hergestellt werden.

Sowohl aus der reduzierenden Schmelze als auch durch die Simultanelektrolyse werden Produkte gewonnen, die sich für die Herstellung von Wasserstoffspeicherlegierungen eignen, da sie beide Elemente in demselben Verhältnis wie die Wasserstoffspeicherlegierung des verbrauchten Nickel-Metallhydrid-Akkumulators enthalten. Sie können daher für die Herstellung einer Vorlegierung unmittelbar an den Legierungshersteller abgegeben werden. Dabei ist es bei dem elektrolytischen Abscheidungsprodukt nicht erforderlich, mittels besonderer Maßnahmen, wie sie z.B. in der DE-PS 31 23 833 beschrieben werden, das Ni²⁺ /Co²⁺ - Verhältnis während der Elektrolyse so zu steuem, daß ein völlig homogenes Legierungsmaterial abgeschieden wird, da sich die Homogenität der Vorlegierung beim Wiederaufschmelzen einstellt.

Die im Lichtbogenofen erschmolzene Vorlegierung kann nunmehr gemeinsam mit den aus der Doppelsulfatfällung aufgearbeiteten Seltenen Erden in einem Vakuuminduktionstiegelofen oder in einem Vakuumlichtbogenofen zu Wasserstoffspeicheriegierung umgeschmolzen werden, die wieder zur Herstellung neuer Nickel-Metallhydrid-Akkumulatoren dienen kann.

Das SE-Doppelsulfat wird vorher in Säure aufgelöst und zum Karbonat umgefällt, wobei das Natrium in Lösung bleibt. Das Karbonat kann in HCI gelöst werden, und durch Eindampfen erhält man SE-Chlorid, das in einer Schmelzflußelektrolyse zu Mischmetall reduziert wird.

Die wässerige Elektrolyse von Nickel und Kobalt kann in einer Elektrolysezelle mit Diaphragma (sogenannte Hybinette-Zelle) erfolgen. Unter Einhaltung der Elektrolysebedingungen, wie sie für die großtechnische Durchführung einer Nickelgewinnungselektrolyse in Hybinette-Zellen üblich sind, wird eine Ni/Co-Legierung mit einer Stromausbeute von mehr als 90% abgeschieden.

Durch die erfindungsgemäße Flüssig-Flüssig-Extraktion und die Zurückgewinnung von Ni und Co in Form einer Vorlegierung für Wasserstoffspeicherlegierungen erhält die Produktion neuer Nickel-Metallhydrid-Akkumulatoren aus Schrottmaterial eine sehr günstige ökonomische Grundlage.

Es liegt auch im Rahmen der Erfindung, die Herstellung anderer Zellkomponenten aus recyceltem Material zu ermöglichen. Dies gilt insbesondere für die positiven Elektroden, sofern deren aktives Material ebenfalls Ni und Co in einem ähnlichen Mengenverhältnis wie die negative Elektrode in ihrer Wasserstoffspeicherlegierung enthält.

Um das Rückgewinnungsverfahren auch für diese Zellenbestandteile zu nutzen, kann erfindungsgemäß ein Teil der schwach sauren Aufschlußlösung nach der Solventextraktion für eine getrennte Rückgewinnung der allein noch enthaltenen Metalle Ni und Co abgezweigt werden. Die Trennung von Ni und Co kann nach bekannten Verfahren ebenfalls durch eine Flüssig-Flüssig-Extraktion erfolgen.

Das jeweils von der organischen Phase aufgenommene Element wird durch _{"}Strippen" wieder in eine wässerig-saure Phase überführt und aus dieser entweder elektrolytisch ausgeschieden oder als Karbonat gefällt. Aus letzterem wird das reine Metall wiederum durch aluminothermische oder carbothermische Reduktion erhalten.

Das Recycling von Nickel und Kobalt nach dem neuen Verfahren über die Stufe einer _{"}Reinigungsextraktion" ist in erster Linie maßgeschneidert für die Wiederaufbereitung der wertvollsten Inhaltsstoffe von Nickel-Metallhydrid-Akkumulatoren, nämlich der Wasserstoffspeicherlegierungen ihrer negativen Elektroden. Durch die optionale Einzelrückgewinnung von Nickel ist auch die Bereitstellung von neuem Nickelhydroxid und Trägermaterial möglich, zu deren Erzeugung der Batteriehersteller sonst andere Rohstoffquellen heranziehen müßte. Das gleiche gilt für Kobalt, das als Additiv der positiven Elektrodenmasse zugesetzt wird. Dabei erweist sich das Verfahren in seiner Durchführung auch gegenüber untypischen Schrottbeimengungen, z.B. verbrauchten Ni/Cd-Batterien oder Alkali-Mangan Batterien, wenn diese in untergeordneter Menge durch Fehlsortierung zur Verwertung anfallen, als weitgehend unempfindlich.

Bei der getrennten Rückgewinnung von Nickel und Kobalt nach der Flüssig-Flüssig- bzw. Solventextraktion können mit Vorteil bestehende Anlagen zur Elektrolyse dieser Metalle genutzt werden.

## Patentansprüche

1. Verfahren zur Rückgewinnung von Metallen aus gebrauchten Nickel-Metallhydrid-Akkumulatoren, dadurch gekennzeichnet, daß
der Akkumulatorenschrott sauer aufgeschlossen,
die Seltenerdmetalle als Doppelsulfate abgetrennt,
das Eisen durch Anheben des pH-Wertes des Filtrats ausgefällt und
das Filtrat der Eisen-Ausfällung zum Zwecke des Ausbringens weiterer Metalle wie Zink, Cadmium, Mangan, Aluminium sowie Resten an Eisen und Seltenen Erden einer Flüssig-Flüssig-Extraktion mit einem organischen Extraktionsmittel unterzogen wird, wobei das Extraktionsmittel und der pH-Wert so gewählt werden, daß nach der Extraktion lediglich die Metalle Nickel und Kobalt in der wässerigen Phase vollständig gelöst und in dem gleichen Atomverhältnis verbleiben, wie sie im Akkumulatorenschrott vorgelegen haben.

2. Verfahren nach Anspruch 1, dadurch gekennzeichnet, daß die organische Extraktionsflüssigkeit aus einem Kationenaustauscher und einem Verdünnungsmittel besteht.

3. Verfahren nach Anspruch 2, dadurch gekennzeichnet, daß die organische Extraktionsflüssigkeit aus einem Gemisch aus Di-Ethyl-Hexyl-Phosphorsäure (DEHPA) mit Iso-tridecanol und einem aliphatischen Kohlenwasserstoff im Verhältnis 30 : 10 : 60 gebildet ist.

4. Verfahren nach einem der Ansprüche 1 bis 3, dadurch gekennzeichnet, daß die Lösungsmittelextraktion bei einem PH-Wert in der Ausgangslösung zwischen pH3 und pH4 durchgeführt wird.

5. Verfahren nach Anspruch 4, dadurch gekennzeichnet, daß die Lösungsmittelextraktion bei pH 3,5 durchgeführt wird.

6. Verfahren nach einem der Ansprüche 1 bis 4, dadurch gekennzeichnet, daß aus der mit dem Extraktionsmittel behandelten wässerigen Phase die Metalle Nickel und Kobalt gemeinsam als Nickel-Kobalt-Legierung abgeschieden werden.

7. Verfahren nach Anspruch 5, dadurch gekennzeichnet, daß die Legierung beider Elemente im Verhältnis ihrer Konzentrationen in der Lösung abgeschieden wird.

8. Verfahren nach Anspruch 6, dadurch gekennzeichnet, daß das Verhältnis von Nickel und Kobalt in der Abscheidungslegierung dem gleichen Verhältnis entspricht, in welchem die beiden Elemente bei der Aufarbeitung von Nickel-Metallhydrid Akkumulatoren anfallen.

9. Verfahren nach einem der Ansprüche 5 bis 7, dadurch gekennzeichnet, daß die Nikkel/Kobalt-Legierung als Vorlegierung neben dem Mischmetall zur Herstellung einer neuen Wasserstoffspeicherlegierung verwendet wird.

10. Verfahren nach einem der Ansprüche 1 bis 4, dadurch gekennzeichnet, daß aus der wässerigen Phase nach der Flüssig-Flüssig-Extraktion Nickel und Kobalt getrennt zurückgewonnen werden.

## Claims

1. Process for the recovery of metals from used nickel/metal hydride storage batteries, characterized in that
the storage battery scrap is acidically digested,
the rare earth metals are separated as double sulphates,
the iron is precipitated by increasing the pH of the filtrate and
the filtrate from the iron precipitation is subjected to a liquid/liquid extraction with an organic extractant for the purpose of recovering further metals, such as zinc, cadmium, manganese, aluminium and residues of iron and rare earths, the extractant and the pH being chosen so that, after the extraction, only the metals nickel and cobalt are completely dissolved in the aqueous phase and remain in the same atomic ratio as that in which they were present in the storage battery scrap.

2. Process according to Claim 1, characterized in that the organic extraction liquid is composed of a cationic exchanger and a diluent.

3. Process according to Claim 2, characterized in that the organic extraction liquid is formed from a mixture of diethylhexylphosphoric acid (DEHPA) with isotridecanol and an aliphatic hydrocarbon in the ratio of 30:10:60.

4. Process according to one of Claims 1 to 3, characterized in that the solvent extraction is carried out at a pH in the starting solution of between pH 3 and pH 4.

5. Process according to Claim 4, characterized in that the solvent extraction is carried out at pH 3.5.

6. Process according to one of Claims 1 to 4, characterized in that the metals nickel and cobalt are jointly deposited as nickel/cobalt alloy from the aqueous phase treated with the extractant.

7. Process according to Claim 5, characterized in that the alloy of the two elements is deposited in the ratio of their concentrations in the solution.

8. Process according to Claim 6, characterized in that the ratio of nickel and cobalt in the deposition alloy corresponds to the same ratio as that in which the two elements occur in the processing of nickel/metal hydride storage batteries.

9. Process according to one of Claims 5 to 7, characterized in that the nickel/cobalt alloy is used as master alloy in addition to the mixed metal for the production of a fresh hydrogen-storage alloy.

10. Process according to one of Claims 1 to 4, characterized in that nickel and cobalt are separately recovered from the aqueous phase after the liquid/liquid extraction.

## Revendications

1. Procédé de récupération des métaux d'accumulateurs usagés nickel-hydrure métallique,
caractérisé en ce qu'
- on dissout les accumulateurs rebutés dans un acide,
- on sépare les métaux de terres rares sous forme de sulfates doubles,
- on précipite le fer par augmentation du pH du filtrat et on soumet le filtrat provenant de la précipitation du fer à une extraction liquide-liquide par un agent d'extraction organique pour extraire d'autres matériaux comme le zinc, le cadmium, le manganèse, l'aluminium ainsi que des restes de fer et de terres rares, où on choisit l'agent d'extraction et le pH de telle sorte qu'après l'extraction seuls les métaux nickel et cobalt restent totalement dissous dans la phase aqueuse et y demeurent dans le même rapport atomique que celui existant dans les accumulateurs rebutés.

2. Procédé selon la revendication 1,
caractérisé en ce que
le liquide d'extraction est constitué d'un échangeur de cations et d'un diluant.

3. Procédé selon la revendication 2,
caractérisé en ce que
le liquide d'extraction organique est constitué d'un mélange de phosphate de diéthyle et d'hexyle (DEHPA) et d'iso-tridécanol et d'un hydrocarbure aliphatique dans le rapport 30 : 10 : 60.

4. Procédé selon l'une des revendications 1 à 3,
caractérisé en ce qu'
on réalise l'extraction par solvant à une valeur de pH dans la solution de départ comprise entre pH 3 et pH 4.

5. Procédé selon la revendication 4,
caractérisé en ce qu'
on réalise l'extraction par solvant à pH 3,5.

6. Procédé selon l'une des revendications 1 à 4,
caractérisé en ce qu'
on sépare les métaux nickel et cobalt ensemble sous forme d'alliage nickel-cobalt, à partir de la phase aqueuse traitée par l'agent d'extraction.

7. Procédé selon la revendication 5,
caractérisé en ce qu'
on dépose l'alliage des deux éléments dans le rapport de leurs concentrations dans la solution.

8. Procédé selon la revendication 6,
caractérisé en ce que
le rapport du nickel et du cobalt dans l'alliage déposé est le même rapport que celui des deux éléments présents dans les accumulateurs nickel-hydrure métallique retraités.

9. Procédé selon l'une des revendications 5 à 7,
caractérisé en ce qu'
on utilise l'alliage nickel-cobalt comme précurseur d'alliage en présence de métal mixte pour préparer un nouvel alliage accumulant l'hydrogène.

10. Procédé selon l'une des revendications 1 à 4,
caractérisé en ce qu'
on récupère séparément le nickel et le cobalt de la phase aqueuse après extraction liquide-liquide.
